# EUROPEAN PATENT SPECIFICATION

(11) **EP 3 379 103 B1**
(45) Date of publication and mention of the grant of the patent: **26.08.2020**
(21) Application number: 15908734.5
(22) Date of filing: 17.11.2015
(51) Int. Cl.: F16H 1/32, F16H 57/04

(54) **STRAIN-WAVE GEAR DEVICE**
DEHNUNGSWELLENGETRIEBEVORRICHTUNG
DISPOSITIF D'ENGRENAGE À ONDES DE DÉFORMATION

(43) Date of publication of application: 26.09.2018
(73) Proprietor: Harmonic Drive Systems Inc., Shinagawa-ku Tokyo 140-0013 (JP)
(72) Inventor: HANDA, Jun, Azumino-shi Nagano 399-8305 (JP); KIMURA, Hiroaki, Azumino-shi Nagano 399-8305 (JP); MIYAKE, Sotaro, Azumino-shi Nagano 399-8305 (JP)
(74) Representative: TBK
(86) International application number: PCT/JP2015/082320
(87) International publication number: WO 2017/085794

(56) References cited:
- DE-A1-102010 039 388
- JP-A- H09 250 609
- JP-A- 2008 164 149
- JP-U- H0 618 749
- JP-U- H0 618 749
- JP-U- H02 110 741
- JP-U- H02 110 741
- JP-U- H02 116 053

## Description

### Technical Field

The present invention relates to a strain wave gearing according to the preamble of claim 1, and more specifically to a strain wave gearing provided with a foreign-matter intrusion preventing mechanism for preventing foreign matters from intruding into a wave-generator bearing of the strain wave gearing.

### BACKGROUND ART

It is proposed, in a strain wave gearing, that a sealing member be disposed to prevent a lubricant for lubricating a portion of a wave generator bearing from mixing with a lubricant for lubricating a meshing portion between an internal gear and an external gear, as is disclosed in Patent document 1. The sealing member makes a side seal attached to a wave generator plug to come in close contact with the inner peripheral surface of an outer ring of a wave generator bearing. Patent document 2 shows a strain wave gearing according to the preamble of claim 1. Patent documents 3 and 4 show conventional strain wave gearings.

### PRIOR ART DOCUMENT

### PATENT DOCUMENT

Patent Document 1: JP 2008 164149 A
Patent Document 2: JP H02 110741 U
Patent Document 3: DE 10 2010 039388 A1
Patent Document 4: JP H06 18749 U

### SUMMARY OF THE INVENTION

### PROBLEMS TO BE SOLVED BY THE INVENTION

The sealing member disclosed in Patent Document 1 is in close contact with the outer-ring inner peripheral surface of the wave generator bearing, leaving the sliding friction portion between the outer-ring outer peripheral surface and the external-gear inner peripheral surface to be a laterally open state. Thus, foreign matters generated in the meshing portion between the external gear and the internal gear may be intruded, together with a lubricant, into the outer-ring outer peripheral surface and the external-gear inner peripheral surface, causing excessive sliding wear or other defects in the sliding friction portion.

An object of the present invention is to provide a strain wave gearing, which can prevent foreign matters from intruding into a sliding portion of a wave-generator bearing, in particular, a sliding portion between the outer-ring outer peripheral surface of the bearing and an external-gear inner peripheral surface.

### MEANS OF SOLVING THE PROBLEMS

The object is achieved by a strain wave gearing having the features of claim 1. A Further advantageous development of the present invention is set out in the dependent claim.

A strain wave gearing of the present invention includes:
a rigid internal gear;
a flexible external gear disposed coaxially inside the internal gear; and
a wave generator that flexes the external gear into a non-circular shape to partially mesh with the internal gear, and moves a meshing position between the two gears in a circumferential direction,
wherein the external gear has a cylindrical external-tooth forming portion that is flexible in a radial direction and is provided with at least one end being an open end; and the wave generator is mounted coaxially inside the external-tooth forming portion.

In addition, the wave generator has:
a wave-generator plug that is a rigid body having a non-circular contour;
a wave-generator bearing mounted between a non-circular plug outer peripheral surface of the wave-generator plug and an inner peripheral surface of the external-tooth forming portion; and
a foreign-matter intrusion preventing mechanism that covers a space from the wave-generator plug to an inner peripheral surface of the external gear.

Furthermore, the foreign-matter intrusion preventing mechanism has an annular filter capable of capturing foreign matters mixed in a lubricant passing therethrough; and a lubricant-impermeable filter attachment plate. The filter attachment plate is attached to the wave-generator plug so as to rotate integrally therewith. The filter is attached to the filter attachment plate so as to rotate integrally therewith, while it is in contact with the inner peripheral surface of the external-tooth forming portion in a slidable state.

A lubricant passes through the filter between the wave-generator bearing and the meshing portion between the external gear and the internal gear. Foreign matters included in the lubricant are therefore captured and removed from the lubricant by the filter. In other words, foreign matters are prevented from intruding together with the lubricant flowing into the wave-generator bearing side. Specifically, because the filter is in contact with the inner peripheral surface of the external-tooth forming portion of the external gear, foreign matters can be assuredly prevented from intruding into the sliding portion between the outer-ring outer peripheral surface and the inner peripheral surface of the external-tooth forming portion of the external gear.

Since the filter attachment plate is a lubricant-impermeable plate, lubricant passes, via only the filter, between the meshing portion of the two gears and the wave-generator bearing. When a lubricant for lubricating the meshing portion between the two gears differs in type from that for lubricating the sliding portion of the wave-generator bearing, these lubricants are maintained in a somewhat separated state by flow resistance of the filter, whereby no problem occurs in practical use.

In the strain wave gearing of the present invention, the filter is provided with a non-circular filter outer peripheral surface similar in shape to a non-circular plug outer peripheral surface of the wave-generator plug, in which the filter is attached to the filter attachment plate so that the non-circular filter outer peripheral surface is in the same phase as the non-circular plug outer peripheral surface, and the non-circular filter outer peripheral surface is in contact with the inner peripheral surface of the external-tooth forming portion.

With this configuration, the filter is maintained to be a state being in contact with the inner peripheral surface of the external-tooth forming portion of the external gear without being subjected to repeated flexing in the radial direction. Thus, the filter and the inner peripheral surface of the external-tooth forming portion of the external gear are reliably maintained in a contact state.
It can reliably prevent foreign matters mixed in a lubricant from intruding into the wave-generator bearing side through the space between the filter and the inner peripheral surface of the external-tooth forming portion.

Preferably, the wave-generator plug of the wave generator has an ellipsoidal plug outer peripheral surface, and the external gear is flexed ellipsoidally by the wave generator. It is also possible that the external gear be made to flex into a non-circular shape other than an ellipsoidal shape to mesh with the internal gear at three or more positions in the circumferential direction.

### BRIEF DESCRIPTION OF THE DRAWINGS

FIG. 1 includes a lateral cross-sectional view showing a strain wave gearing according to the present invention, and an explanatory view showing a longitudinal cross-section thereof; and
FIG. 2 is an explanatory view showing the filter and the filter attachment plate of a foreign-matter intrusion preventing mechanism.

### MODE FOR CARRYING OUT THE INVENTION

An embodiment of a strain wave gearing according to the present invention will be described with reference to the drawings hereinafter.

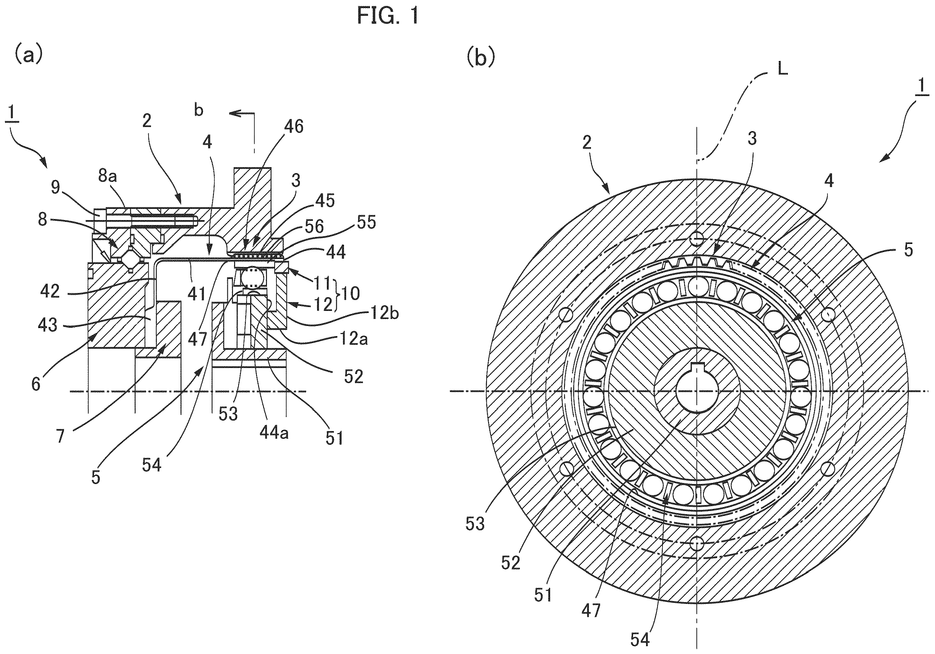

FIG. 1(a) is a lateral cross-sectional view showing a cup-type strain wave gearing according to the present embodiment, and FIG. 1(b) is an explanatory view showing a longitudinal cross-section thereof. The strain wave gearing 1 is provided with a cylindrical housing 2, an internal gear 3 formed integrally on one end part of the housing 2, a cup-shaped flexible external gear 4 coaxially disposed inside the housing 2, and a wave generator 5 coaxially assembled inside the external gear 4.

The cup-shape external gear 4 is provided with a radially-flexible cylindrical body part 41, a diaphragm 42 extending radially inward from an end of the cylindrical body part 41, a rigid discoid boss 43 continued to an inner peripheral edge of the diaphragm 42, and external teeth 45 formed on an outer peripheral portion at the side of the other open end 44 of the cylindrical body part 41.

The portion at the side of the open end 44 of the cylindrical body part 41 where the external teeth 45 are formed is referred to as an external-tooth forming portion 46. The wave generator 5 is coaxially fitted inside the external-tooth forming portion 46. The wave generator 5 is provided with cylindrical hub 51 (input shaft), a wave-generator plug 52 attached coaxially to the outer circumference of the hub, and a wave-generator bearing 54 mounted between an ellipsoidal plug outer peripheral surface 53 of the wave-generator plug 52 and an inner peripheral surface 47 of the external-teeth forming portion 46. The wave-generator bearing 54 is made to flex ellipsoidally by the wave-generator plug 52.

In this example, a disc-shaped output shaft 6 is coaxially connected and fixed to the boss 43 of the external gear 4. For example, the output shaft 6 and a discoid pressure member 7 are fastened and fixed together by fastening bolts (not shown) in a state sandwiching the boss 43. The output shaft 6 is also supported in a free rotating state, via a cross roller bearing 8, on the housing 2. The cross roller bearing 8 is, for example, an outer-ring divided type bearing, in which an inner ring is integrally formed on the outer peripheral surface of the output shaft 6, and an divided-type outer ring 8a is coaxially fastened and fixed to the housing 2 by fastening bolts 9.

The wave generator 5 is associated with a foreign-matter intrusion preventing mechanism 10 that prevents foreign matters from intruding into the wave-generator bearing 54. The foreign-matter intrusion preventing mechanism 10 is located at the side of the open end 44 with respect to the wave-generator bearing 54 and covers the space formed between the wave-generator plug 52 and the inner peripheral surface 47 of the external-tooth forming portion 46 of the external gear 4. The foreign-matter intrusion preventing mechanism 10 is provided with an annular filter 11 capable of capturing foreign matters mixed in a lubricant passing therethrough, and a lubricant-impermeable filter attachment plate 12.

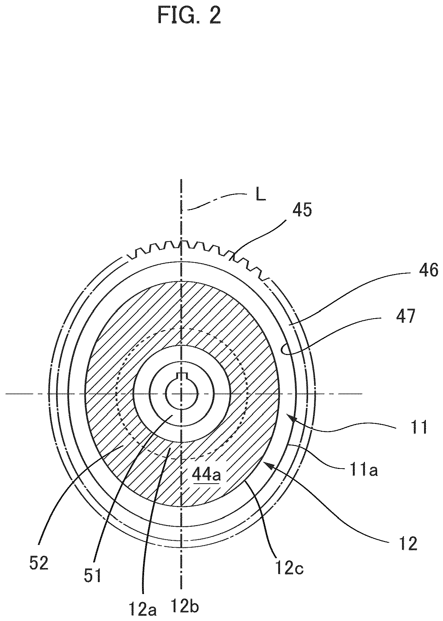

FIG. 2 is an explanatory view showing the filter 11 and the filter attachment plate 12 of the foreign-matter intrusion preventing mechanism 10. Referring to FIGS. 1 and 2, the filter attachment plate 12 is attached to the wave-generator plug 52 so as to rotate integrally therewith. The filter 11 is attached to the filter attachment plate 12 to rotate integrally therewith and is in slidably close contact with the inner peripheral surface 47 of the external-tooth forming portion 46 of the external gear 4.

The filter attachment plate 12 of the present example is provided with an annular fixed part 12a of a rectangular cross-section, fixed to an ellipsoidal-contoured end face 44a of the wave-generator plug 52 facing the open-end 44 side; and an ellipsoidal-contoured attachment-plate main part 12b of a constant thickness spreading radially outward from the annular fixed part 12a. The attachment-plate main part 12b faces the end face 44a of the wave-generator plug 52 at a constant gap, and the ellipsoidal outer peripheral surface 12c thereof extends to a position near the outer ring 55 of the wave-generator bearing 54.

The ellipsoidal outer peripheral surface 12c is similar in shape to the ellipsoidal plug outer peripheral surface 53 of the wave-generator plug 52. The filter attachment plate 12 is fixed to the wave-generator plug 52 so that the ellipsoidal outer peripheral surface 12c is in the same phase as the ellipsoidal plug outer peripheral surface 53 of the wave-generator plug 52. In other words, the major-axis position L of the ellipsoidal plug outer peripheral surface 53 of the wave-generator plug 52 is in coincidence with the major-axis position of the ellipsoidal outer peripheral surface 12c of the filter attachment plate 12.

The filter 11 is a radially-flexible annular filter having a rectangular cross-section, made from non-woven fabric or other material, and is mounted on the ellipsoidal outer peripheral surface 12c of the filter attachment plate 12 and is made to flex ellipsoidally. The thus ellipsoidally-flexed outer peripheral surface 11a of the filter 11 is in close contact with the inner peripheral surface 47 of the external-tooth forming portion 46 of the external gear 4.

A filter attachment plate having a circular outer peripheral surface may be arranged, in which a filter having an ellipsoidal outer peripheral surface is fixed to the circular outer peripheral surface. In this case as well, the ellipsoidal outer peripheral surface of the filter is made to be an ellipsoidal shape similar to the ellipsoidal plug outer peripheral surface 53 of the wave-generator plug 52. The filter is attached to the filter attachment plate so that the major-axis position of the ellipsoidal outer peripheral surface of the filter is in coincidence with the major-axis position of the ellipsoidal plug outer peripheral surface 53 of the wave-generator plug 52.

In the strain wave gearing 1 of the present example, the lubricant supplied to the inside thereof passes, via the filter 1, between the wave-generator bearing 54 and the meshing portions between the external gear 4 and the internal gear 3. Foreign matters included in the lubricant are captured and removed therefrom as the lubricant passes through the filter 11. Foreign matters are therefore prevented from intruding into the wave-generator bearing 54 side together with the lubricant.

In addition, the filter 11 provided with the ellipsoidal outer peripheral surface rotates integrally with the wave generator 5. The ellipsoidal outer peripheral surface 11a of the filter 11 is therefore maintained to be the same phase in all time as the ellipsoidal shape of the external-tooth forming portion 46 of the external gear 4 which is flexed ellipsoidally by the wave generator 5. Thus, the filter 11 is not subjected to radial flexing by the inner peripheral surface 46 of the external-tooth forming portion 46, but is maintained to be in close contact with the inner peripheral surface 47.

Therefore, sealing is assuredly formed between the filter 11 and the inner peripheral surface 47 of the external-tooth forming portion 46 of the external gear 4, whereby a lubricant mixed with foreign matters can be assuredly prevented from intruding into the wave-generator bearing 54 side without passing through the filter 11. In particular, because the filter 11 is in contact with the inner peripheral surface 47 of the external-tooth forming portion 46 of the external gear 4, foreign matters can be assuredly prevented from intruding into the sliding friction portion between the outer peripheral surface 56 of the outer ring 55 of the wave-generator bearing 54 and the inner peripheral surface 47 of the external-tooth forming portion 46 of the external gear 4.

In addition, since the filter attachment plate 12 is a lubricant-impermeable plate, lubricant passes, via only the filter, between the wave-generator bearing 54 and the meshing portions between the two gears 3, 4. When a lubricant for lubricating the meshing portions between the two gears 3 and 4 differs in type from that for lubricating the sliding portion of the wave-generator bearing 54, these lubricants are maintained in a separated state by flow resistance of the filter 11. It is therefore no problem caused by mixture of these lubricants in practical use.

The present invention is, in this example, applied to a cup-type strain wave gearing provided with a cup-shaped external gear. The present invention can also be applied to a top-hat-type strain wave gearing provided with a to-hat-shaped external gear in a similar manner.

Furthermore, the present invention can be applied to a flat-type strain wave gearing provided with a cylindrical external gear. In this case, a cylindrical external gear has open ends on both sides. A wave generator coaxially accommodated inside the external gear can be provided on both sides thereof with a foreign-matter intrusion preventing mechanism having a filter and a filter attachment plate.

## Claims

1. A strain wave gearing (1) comprising:
a rigid internal gear (3);
a flexible external gear (4) disposed coaxially inside the internal gear (3); and
a wave generator (5) that flexes the external gear (4) into a non-circular shape to partially mesh with the internal gear (3), and moves a meshing position between the two gears (3, 4) in a circumferential direction,
wherein the external gear (4) has a cylindrical external-tooth forming portion (46) that is flexible in a radial direction and is provided with at least one end being an open end (44); and
the wave generator (5) is mounted coaxially inside the external-tooth forming portion (46),
wherein the wave generator (5) has:
a wave-generator plug (52) that is a rigid body having a non-circular contour;
a wave-generator bearing (54) mounted between a non-circular plug outer peripheral surface (53) of the wave-generator plug (52) and an inner peripheral surface (47) of the external-tooth forming portion (46); and
a foreign-matter intrusion preventing mechanism (10) that covers a space formed between the wave-generator plug (52) and an inner peripheral surface of the external gear (4),
wherein the foreign-matter intrusion preventing mechanism (10) has:
an annular filter (11) capable of capturing foreign matters mixed in a lubricant passing therethrough; and
a lubricant-impermeable filter attachment plate (12),
wherein the filter attachment plate (12) is attached to the wave-generator plug (52) so as to rotate integrally therewith; and
the filter (11) is attached to the filter attachment plate (12) so as to rotate integrally therewith, and is in contact with the inner peripheral surface (47) of the external-tooth forming portion (46) in a slidable state, **characterized in that**
the filter (11) is provided with a non-circular filter outer peripheral surface (11a) similar in shape to a non-circular plug outer peripheral surface (53) of the wave-generator plug (52),
the filter (11) is attached to the filter attachment plate (12) so that the non-circular filter outer peripheral surface (11a) is in a same phase as the non-circular plug outer peripheral surface (53) of the wave-generator plug (52), and
the non-circular filter outer peripheral surface (11a) is maintained to be in contact with the inner peripheral surface (47) of the external-tooth forming portion (46) in a manner in which the filter (11) is not subjected to radial flexing by the inner peripheral surface (46) of the external-tooth forming portion (46).

2. The strain wave gearing (1) according to claim 1,
wherein the wave-generator plug (52) of the wave generator (5) has an ellipsoidal plug outer peripheral surface (53), and
the external gear (4) is flexed ellipsoidally by the wave generator (5).

## Patentansprüche

1. Wellgetriebe (1), mit:
einem starren Innenzahnrad (3);
einem biegbaren Außenzahnrad (4), das in dem Innenzahnrad (3) koaxial angeordnet ist; und
einem Wellgenerator (5), der das Außenzahnrad (4) in eine nicht-kreisförmige Gestalt biegt, um mit dem Innenzahnrad (3) teilweise zu kämmen, und eine Kämmposition zwischen den zwei Zahnrädern (3, 4) in einer Umfangsrichtung bewegt,
wobei das Außenzahnrad (4) einen zylindrischen Außenzahnausbildungsabschnitt (46) hat, der in einer radialen Richtung biegbar ist und mit mindestens einem Ende versehen ist, das ein offenes Ende (44) ist; und
der Wellgenerator (5) in dem Außenzahnausbildungsabschnitt (46) koaxial montiert ist,
wobei der Wellgenerator (5) Folgendes hat:
einen Wellgeneratorstopfen (52), der ein starrer Körper ist, der eine nicht-kreisförmige Kontur hat;
ein Wellgeneratorlager (54), das zwischen einer nicht-kreisförmigen Stopfenaußenumfangsfläche (53) des Wellgeneratorstopfens (52) und einer Innenumfangsfläche (47) des Außenzahnausbildungsabschnitts (46) montiert ist; und
einen Fremdkörpereintrittsschutzmechanismus (10), der einen Raum abdeckt, der zwischen dem Wellgeneratorstopfen (52) und einer Innenumfangsfläche des Außenzahnrades (4) ausgebildet ist,
wobei der Fremdkörpereintrittsschutzmechanismus (10) Folgendes hat:
einen ringförmigen Filter (11), der imstande ist, Fremdkörper einzufangen, die in ein Schmiermittel gemischt sind, das durch diesen tritt; und
eine schmiermittelundurchlässige Filterbefestigungsplatte (12),
wobei die Filterbefestigungsplatte (12) an dem Wellgeneratorstopfen (52) befestigt ist, um mit diesem einstückig zu drehen; und
der Filter (11) an der Filterbefestigungsplatte (12) befestigt ist, um mit dieser einstückig zu drehen, und mit der Innenumfangsfläche (47) des Außenzahnausbildungsabschnitts (46) in einem gleitbaren Zustand in Kontakt ist, **dadurch gekennzeichnet, dass**
der Filter (11) mit einer nicht-kreisförmigen Filteraußenumfangsfläche (11a) versehen ist, die in ihrer Gestalt ähnlich einer nicht-kreisförmigen Stopfenaußenumfangsfläche (53) des Wellgeneratorstopfens (52) ist,
der Filter (11) an der Filterbefestigungsplatte (12) befestigt ist, sodass die nicht-kreisförmige Filteraußenumfangsfläche (11a) in einer gleichen Phase wie die nicht-kreisförmige Stopfenaußenumfangsfläche (53) des Wellgeneratorstopfens (52) ist, und
die nicht-kreisförmige Filteraußenumfangsfläche (11a) mit der Innenumfangsfläche (47) des Außenzahnausbildungsabschnitts (46) auf eine Weise in Kontakt aufrechterhalten wird, bei der der Filter (11) einem radialen Biegen durch die Innenumfangsfläche (46) des Außenzahnausbildungsabschnitts (46) nicht ausgesetzt ist.

2. Wellgetriebe (1) nach Anspruch 1,
wobei der Wellgeneratorstopfen (52) des Wellgenerators (5) eine ellipsenförmige Stopfenaußenumfangsfläche (53) hat, und
das Außenzahnrad (4) durch den Wellgenerator (5) ellipsenförmig gebogen ist.

## Revendications

1. Dispositif d'engrenage à ondes de déformation (1) comprenant :
un engrenage interne rigide (3) ;
un engrenage externe flexible (4) disposé de manière coaxiale à l'intérieur de l'engrenage interne (3) ; et
un générateur d'ondes (5) qui fléchit l'engrenage externe (4) en une forme non circulaire pour s'engrener partiellement avec l'engrenage interne (3) et déplace une position d'engrènement entre les deux engrenages (3, 4) dans une direction circonférentielle,
dans lequel l'engrenage externe (4) a une partie de formation de dent externe cylindrique (46) qui est flexible dans une direction radiale et est prévue avec au moins une extrémité qui est une extrémité ouverte (44) ; et
le générateur d'ondes (5) est monté de manière coaxiale à l'intérieur de la partie de formation de dent externe (46),
dans lequel le générateur d'ondes (5) a :
un obturateur de générateur d'ondes (52) qui est un corps rigide ayant un contour non circulaire ;
un palier de générateur d'ondes (54) monté entre une surface périphérique externe d'obturateur non circulaire (53) de l'obturateur de générateur d'ondes (52) et une surface périphérique interne (47) de la partie de formation de dent externe (46) ; et
un mécanisme anti-intrusion de corps étrangers (10) qui recouvre un espace formé entre l'obturateur de générateur d'ondes (52) et une surface périphérique interne de l'engrenage externe (4) ;
dans lequel le mécanisme anti-intrusion de corps étrangers (10) a :
un filtre annulaire (11) pouvant capturer les corps étrangers mélangés dans un lubrifiant passant à travers ce dernier ; et
une plaque de fixation de filtre imperméable au lubrifiant (12),
dans lequel la plaque de fixation de filtre (12) est fixée à l'obturateur de générateur d'ondes (52) afin de tourner, de manière solidaire, avec ce dernier ; et
le filtre (11) est fixé à la plaque de fixation de filtre (12) afin de tourner de manière solidaire avec ce dernier, et est en contact avec la surface périphérique interne (47) de la partie de formation de dent externe (46) dans un état de coulissement, **caractérisé en ce que** :
le filtre (11) est prévu avec une surface périphérique externe de filtre non circulaire (11a) similaire, du point de vue de la forme, à une surface périphérique externe d'obturateur non circulaire (53) de l'obturateur de générateur d'ondes (52),
le filtre (11) est fixé à la plaque de fixation de filtre (12) de sorte que la surface périphérique externe de filtre non circulaire (11a) est dans une même phase que la surface périphérique externe de bouchon non circulaire (53) du bouchon de générateur d'ondes (52), et
la surface périphérique externe de filtre non circulaire (11a) est maintenue pour être en contact avec la surface périphérique interne (47) de la partie de formation de dent externe (46) d'une manière selon laquelle le filtre (11) n'est pas soumis à la flexion radiale par la surface périphérique interne (46) de la partie de formation de dent externe (46).

2. Dispositif d'engrenage à ondes de déformation (1) selon la revendication 1,
dans lequel l'obturateur de générateur d'ondes (52) du générateur d'ondes (5) a une surface périphérique externe d'obturateur ellipsoïdale (53), et
l'engrenage externe (4) est fléchi, de manière ellipsoïdale, par le générateur d'ondes (5).
